# EUROPEAN PATENT SPECIFICATION

(11) **EP 1 324 472 B1**
(45) Date of publication and mention of the grant of the patent: **17.03.2010**
(21) Application number: 02018189.7
(22) Date of filing: 20.08.2002
(51) Int. Cl.: H02K 1/18, H02K 16/02, H02K 1/12

(54) **Inner and outer rotor slotless electric motor with ring-type winding**
Innen- und Aussenläufer elektrischer Motor mit Luftspaltringwicklung
Moteur électrique à rotor intérieur et extérieur avec enroulement d'entrefer et bobinage en anneau

(30) Priority: 25.12.2001 CN 01145511
(43) Date of publication of application: 02.07.2003
(73) Proprietor: Jiangxi Grand Tech Motor Co., Ltd., Yujiang County, Jiangxi Province (CN)
(72) Inventor: Zhang, Fuxin, Yujiang County, Jiangxi Province (CN)
(74) Representative: Ganahl, Bernhard

(56) References cited:
- WO-A-99/19962
- US-A- 5 172 021
- PATENT ABSTRACTS OF JAPAN vol. 003, no. 064 (E-114), 31 May 1979 (1979-05-31) & JP 54 041401 A (HITACHI LTD), 2 April 1979 (1979-04-02)
- PATENT ABSTRACTS OF JAPAN vol. 002, no. 051 (E-026), 12 April 1978 (1978-04-12) & JP 53 015502 A (HITACHI LTD), 13 February 1978 (1978-02-13)

## Description

### Technical Field of the Invention

This invention relates to electromotors.

### Background of the Invention

The coil windings in the conventional electromotors, such as brushless motor, are shuttle-shape, wherein the unefficient connecting sides of two ends of the coil windings are composed of two slanting sides, and the coils are so large that total resistance of coil windings of conventional brushless motor can not be reduced. Consequently, performance of motor is greatly influenced, and defects such as insufficiency of torque at low speed, low efficiency and instability in operation widely exist.

Document US 5 172 021 discloses a related electromotor.

### Summary of the Invention

The object of the present invention provides a novel electromotor with higher efficiency and good performance at low speed. Conventional iron core with slots is changed to iron core without slots, winding coils are directly wound on iron, wherein inner and outer circular peripheries face respectively to inner and outer magnets and inner and outer magnetic yokes to form a complete system of electro-magnetic induction circuit. Inner and outer magnets, inner and outer yokes and shaft are joined together by means of screws and connection plate to form the rotor, which rotates in the bearing housing. Iron core, fixed with bearing housing by positioning flange, constitutes the stator. By means of the construction, wherein a feature without slots, the torque-speed characteristic is improved and becomes steeper. Through simultaneous application of ring-type winding and inner and outer rotors, ratio of effective induction length of winding is greatly enhanced and resistance of winding is effectively reduced, so that efficiency and output power at low speed operation are greatly improved. The said motor has advantages such as big power/volume ratio, wide speed regulation range, good performance at low speed and higher efficiency. It is especially suitable for driving motors in cases demanding wide speed regulation range, large torque at low speed, high efficiency and small volume, such as for direct-drive multi-purpose washing machine, electric-drive bicycle and so on.

### Description of drawings

Figure 1 is a longitudinal sectional view of present invention.
Figure 2 is a cross-sectional view of winding and core.
Figure 3 shows the comparison between ring-type coil and conventional coil.

### Embodiment of the invention

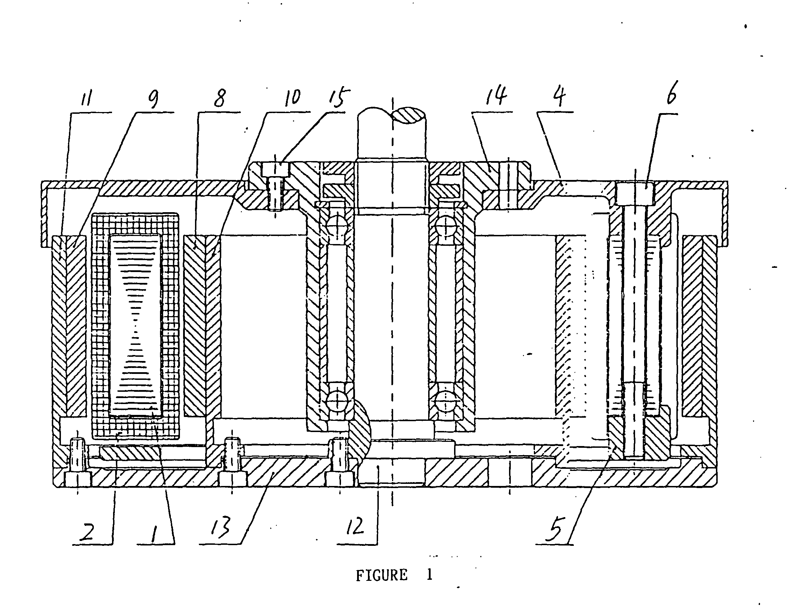

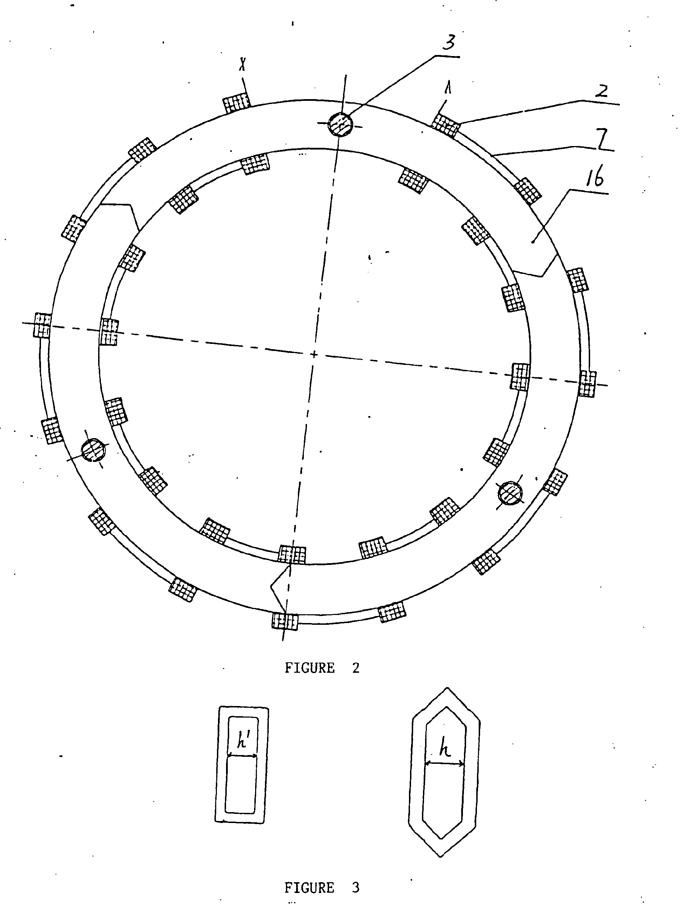

With reference to Figure 1 and 2, the iron core 1 of the present invention is of a construction without slots, winding coils 2 are wound directly on iron core 1, which is split construction. The iron core 1 is composed of three arc-shaped iron core sections 16, whereby it is not only convenient for insertion of coils but also simplified in structure of core, resulting in lower cost. Each iron core has an interval 3 for screws 6 passing to fix positioning seating 4 and positioning plate 5. By means of screws 15 bearing housing 14 is assembled in positioning seating 4 to form the stator. Figure 2 shows one of the 16-pole 3-phase coils, wherein A is the beginning terminal and X is the end terminal. From beginning to end terminal, each coil is wound in forward and backward directions sequentially, connecting through bridge wires 7. Only 15 coils are applied in the 16-pole motor, since they are connected in star form and two phases are energized. The corresponding power of the missing coil is provided by the corresponding coil of another phase. The inner and outer peripheries of winding coils wound on iron core face respectively to inner and outer magnets 8, 9 and inner and outer magnetic yokes 10, 11, together forming a complete system of electromagnetic induction circuit. Inner and outer magnets 8, 9, inner and outer magnetic yokes 10, 11 and rotating shaft are joined respectively to joining plate 13 through screws to form the rotor, rotating in bearing housing 14.

It can be seen from Figure 3, the structure of iron cores and winding method of coils is different (conventional iron core has slots, but present invention has no slot) from conventional design, and consequently inner width h of conventional coil is larger than inner width h' of coil of present invention. The feature is especially obvious in case of a small number of poles. Ineffective connecting wires of conventional coils are longer. Moreover, conventional coils are shuttle-shaped, and connecting sides of two ends of winding coils are composed of two slanting sides, which would greatly increase the length of ineffective connecting wires. Consequently the total resistance of winding coils of conventional brushless DC motor with permanent magnet cannot be reduced, so as to influence performance of motor.

## Claims

1. A slot-less rotating electromotor having inner and outer rotors as well as ring-type windings, comprising a cylinder-shaped iron core (1) with winding coils (2) wound thereon, one axial end of said iron core is passing through a positioning plate (5) underside and is attached to said positioning plate (5), the other axial end of said iron core (1) is attached to a positioning seating (4) which in turn is secured to a bearing housing (14) by screws (15) to form a stator, wherein the winding coils (2) being ringed around the iron core (1), the radially inner and outer peripheries of the winding coils respectively facing to radially inner and outer magnets (8, 9) attached to corresponding inner and outer magnetic yokes (10,11) to form an entire assembly of electromagnetic induction circuit, the inner and outer magnets (8, 9) and the inner and outer magnetic yokes (10, 11) as well as a rotating shaft (12) joined to connecting plate (13) by screws to form the rotors, which rotate within the bearing housing (14).

2. A slot-less electromotor of Claim 1, wherein the iron core (1) is split construction, composed of three are-shaped iron core sections (16), each iron core is provided with an interval (3), through which screws (6) pass to fix the positioning seating (4) and positioning plate (5) in position at the interval.

## Patentansprüche

1. Schlitzfreier rotierender Elektromotor mit Innen- und Außenläufer sowie ringförmigen Wicklungen, umfassend einen zylinderförmigen Eisenkern (1) mit darauf gewundenen gewickelten Spulen (2), wobei ein axiales Ende des Eisenkerns unterseitig an einer Positionierplatte (5) angeordnet ist und an der Positionierplatte (5) befestigt ist, und das andere axiale Ende des Eisenkerns (1) an einer Positionieraufnahme (4) befestigt ist, welche wiederum an ein Lagergehäuse (14) mittels Schrauben (15) gesichert ist, um einen Stator auszubilden, wobei die gewickelten Spulen (2) ringförmig um den Eisenkern (1) gewickelt sind, und die radialen inneren und äußeren Umfangsabschnitte der gewundenen Spulen jeweils radialen inneren und äußeren Magneten (8, 9) gegenüberstehen, die an entsprechenden inneren und äußeren magnetischen Joche (10, 11) befestigt sind, um eine vollständige Einheit eines elektromagnetischen Induktionskreises auszubilden, wobei die inneren und äußeren Magnete (8, 9) und die inneren und äußeren magnetischen Joche (10, 11) sowie auch eine rotierende Drehwelle (12), an eine Verbindungsplatte (13) mittels Schrauben gekoppelt sind, um die Läufer auszubilden, die sich innerhalb des Lagergehäuses (14) drehen.

2. Schlitzfreier Elektromotor nach Anspruch 1, wobei der Eisenkern (1) einen geteilten Aufbau aufweist, bestehend aus drei bogenförmigen Eisenkemabschnitten (16), jeder Eisenkern ist mit einem Abschnitt (3) versehen, durch welchen sich Schrauben (6) erstrecken, um die Positionieraufnahme (4) und die Positionierplatte (5) abschnittsweise in Position zu fixieren.

## Revendications

1. Moteur électrique rotatif dépourvu de fente comprenant un rotor intérieur et un rotor extérieur ainsi que des enroulements de type annulaire, comprenant un noyau de fer (1) de forme cylindrique et des bobinages (2) enroulés sur celui-ci, une extrémité axiale dudit noyau de fer passant à travers une plaque de positionnement (5) du côté inférieur et étant attachée à ladite plaque de positionnement (5), l'autre extrémité axiale dudit noyau de fer (1) étant attachée à un siège de positionnement (4) qui est à son tour fixé sur un boîtier de palier (14) par des vis (15) pour former un stator, dans lequel les bobinages (2) sont disposés en anneau autour du noyau de fer (1), les périphéries radialement intérieures et extérieures des bobinages étant respectivement en face d'aimants radialement intérieurs et extérieurs (8, 9) attachés à des culasses magnétiques correspondantes intérieures et extérieures (10, 11) pour former un ensemble entier formant un circuit d'induction électromagnétique, les aimants intérieurs et extérieurs (8, 9) et les culasses magnétiques intérieures et extérieures (10, 11), ainsi qu'un arbre rotatif (12) réuni à une plaque de connexion (13) par des vis pour former les rotors, qui tournent avec le boîtier de palier (14).

2. Moteur électrique rotatif dépourvu de fente selon la revendication 1, dans lequel le noyau de fer (1) est de construction scindée, composé de trois tronçons de noyau de fer (16) en forme d'arc, chaque noyau de fer étant pourvu d'un intervalle (3), à travers lequel passent des vis (6) pour fixer le siège de positionnement (4) et la plaque de positionnement (5) en position au niveau de l'intervalle.
